# EUROPEAN PATENT APPLICATION

(11) **EP 0 753 677 A1**
(43) Date of publication of application: **15.01.1997**
(21) Application number: 96110840.4
(22) Date of filing: 04.07.1996
(51) Int. Cl.: F16C 33/00, F16J 15/16, F16C 33/78

(54) **A seal for mechanical members coupled for relative rotation, provided with at least one variable-attitude lip**

(30) Priority: 14.07.1995 IT TO950596
(71) Applicant: RFT S.p.A., 10128 Torino (IT)
(72) Inventor: Ciolfi, Gian Gaetano, 22036 Erba (IT)
(74) Representative: Plebani, Rinaldo

(57) **Abstract**

A seal for mechanical members coupled for relative rotation, particularly element rolling bearings, which is fixed to the rotary member and has a sealing lip which cooperates with a seat of the stationary member; the lip (4) is formed integrally with an annular bead (21) which projects axially from the lip, to form a peripheral ring (19) connected to the central part (8) of the seal at a point intermediate the lip and the projecting element, by means of a band (28) of thin section which allows the ring (19) to effect small elastic oscillations in radial planes; in moving, as a result of a centrifugal force, the bead (21) which has a greater mass than the lip, is urged radially outwardly, forcing the lip to move away from its seat without, however, reducing the sealing and protective effect which the seal has when stationary, the elasticity of the thin section (28) being sufficient to keep the lip (4) against the stationary ring (5). Advantages: reduction in friction between the lip and the ring with consequent reduction of heating and wear of the lip itself; longer working life of the seal.

## Description

The present invention relates to a seal for mechanical members coupled for relative rotation, the seal being fixed to the rotary member and provided with at least one sealing lip which, when the members are not in relative movement, is in cooperating contact with the stationary member; more particularly it relates to a seal for protecting the spaces within a rolling bearing, which is fixed to the rotary ring of the bearing and provided with a continuous annular lip, normally coupled in an interference fit with the stationary ring to form a fluid-tight sliding seal with a given pressure, including means for varying the attitude of the sealing lip automatically to reduce and/or eliminate the entirety of this pressure, converting the seal from a sliding to a labyrinthine seal in dependence on the speed of relative rotation of the rings of the bearings.

In the current state of the art, seals are known for members coupled for relative rotation and, in particular, for rolling bearings, for sealing the lubricant within them and for protecting them from external impurities, which have at least one lip held in sliding contact with one of the rings of the bearing; these seals, because of the friction between the or each lip and the sliding surfaces are subject to wear and overheating which reduces their working life and compromises their protective and sealing action.

Seals of the said type are also known which have several adjacent lips which are mutually spaced in the axial sense but held at a small distance from a respective seat of one of the parts coupled for relative movement and which exert their sealing action as a result of a dynamic labyrinthine effect created by the spaces interposed between adjacent lips; however, when the coupled parts are stationary, lacking the dynamic effect, the protection against external impurities is considerably reduced, which thus limits the functional capacity of such seals.

The main object of the present invention is to provide a seal for sealing and protecting members coupled for relative rotation which overcomes the problems mentioned above and displays an effective sealing and protective action both during relative rotation of the coupled members and during pauses in this rotation.

More particularly, an object of the invention is to provide a seal having at least one sealing lip for ensuring effective sealing and protection against external impurities when the coupled members are stationary while the lip is equally able to ensure sealing and protection during relative rotation of the coupled members and operates with practically no sliding friction, thus eliminating wear and overheating.

Hence, according to the invention, there is provided a seal for mechanical members coupled for relative rotation, which is fixed to one of the members which rotates relative to a stationary member with which it is coupled, the seal, including a part for coupling with the rotary member and a sealing ring which cooperates slidingly with a fixed seat in the stationary member, the ring including at least one annular sealing lip which is forced with an interference fit into the seat and is adapted, when the members are stationary relative to each other, to exert a given pressure on the seat, characterised in that the sealing ring includes means for varying the pressure automatically in dependence on the relative rate of rotation of the members coupled.

This and other characteristics of the invention will become more apparent from the following description of two preferred embodiments, given by way of non-limitative example, with reference to the appended drawings, in which:
Figure 1 is a diametral section of part of the seal according to the invention mounted on a rotary member of a coupling under stationary conditions;
Figure 2 is a section of part of the seal of Figure 1 under dynamic conditions;
Figure 3 shows a different embodiment of the seal of Figure 1, used on high-velocity rotary pulleys;
Figure 4 shows an assembly including the seal of Figure 1 by way of example.

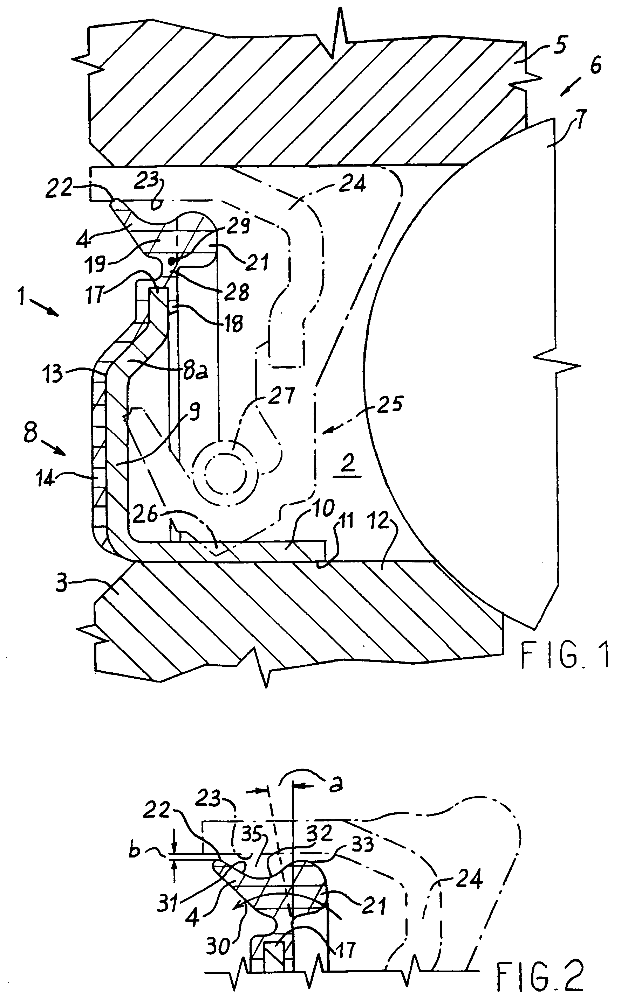

With reference to Figures 1 and 2, reference 1 generally indicates a seal according to a first embodiment of the invention for protecting the kinematic coupling surfaces of two mechanical members in relative rotation; the seal 1, of elastomeric rubber, is constituted by a shield fixed to a rotary member 3 of the coupling and has at least one sealing lip 4 of a shape and dimensions such that it cooperates in sliding, interference contact with a seat of the fixed member 5 of the coupling so as to form a fluid-tight seal; in this particular case, the two rotary members are represented by two rings 3 and 5 of a rolling element bearing 6, particularly a ball bearing 7.

In the non-limitative description which follows, it is supposed that the inner ring 3 rotates while the outer ring 5 is stationary, it being understood that the following description is valid for any pair of mechanical members coupled kinematically for relative rotation.

A central part 8 of the seal 1 is strengthened by an annular reinforcement 9 which has a substantially right-angled L-shaped section and is thus constituted by a radial part 8a connected integrally to a cylindrical part 10 bent at a right angle and having a cylindrical surface 11 for coupling with a corresponding cylindrical surface 12 of the rotary ring 3 of the rolling element bearing 6.

An outer surface 13 of the reinforcement core 8 facing in the opposite direction from the balls 7 is coated with a protective layer 14 of elastomeric rubber formed by one of the known co-moulding methods.

The elastomeric layer 14 extends radially beyond an outer edge 17 of the reinforcement 8 so as to form an appendage 18 bent at 180° over the edge 17 and covering a short section of the surface of the reinforcement 8 facing the balls 7; the appendage 18 also extends radially beyond the edge 17 to form a sealing ring 19 of the seal 1, formed from the same elastomeric material as the layer 14 and carrying on one side the lip 4 and on the other side an annular body, or bead, 21; the bead 21 is formed integrally with the lip 4 and projects towards the space 2 between the two rings 3 and 5 on the opposite side from the lip 4 in the axial sense; the lip 4 projects diagonally outwardly of the bearing 6, that is, in the opposite direction from the space 2 between the rings 3 and 5; the lip 4 terminates in a rounded edge 22 and normally slides, with a slight pressure because of the interference assembly, on a sealing seat represented by a cylindrical surface 23 of the stationary part of the coupling; in the assembly shown in Figure 1, the surface 23 is part of a reinforcement core 24 of a second seal 25 constituted by a sealing shield which seals against the rotary ring 3, known in the art, including a single lip 26 which is V-shaped in radial section and provided on its radially outer side (or side opposite the ring 3) with a known toroidal pressure spring 27; this second seal 25 is keyed to the outer ring 5 and shown in chain line and is not described further for simplicity.

The sealing ring 19 is connected to the appendage 18 at a point intermediate the lip 4 and the bead 21 by means of an annular band 28 of limited thickness which can flex resiliently to allow the sealing ring 19 to oscillate slightly in radial planes relative to the appendage 18. Hence the annular band 28 behaves as a notional hinge having an axis extending in a circle around the appendage 18 and represented in the plane of Figure 1 by the point 29.

During the rotation of the ring 3 relative to the ring 5, considered as stationary, the centrifugal force generated by the mass of the bead 21 prevails over the corresponding centrifugal force applied to the lip 4 due to the difference between their masses and hence the sealing ring 19, behaving as a rigid body, pivots through a small angle "a" in the sense of the arrow 30 (Figure 2) so that the lip 4 moves away from the seat 23 through a distance "b".

Hence, during the rotation of the seal 1 relative to the stationary ring 5, the attitude of the lip 4 varies continuously with the variation in the speed of rotation in the sense that the contact between the lip 4 and its seat 23 reduces progressively as the speed of rotation increases until it becomes nil.

On the contrary, as the speed of rotation falls, the lip is returned to its original contact with its seat by the pivoting of the ring 19 in the opposite sense from the arrow 30, this being facilitated by the resilience of the connecting band 28.

It is thus clear that wear and heating due to friction of the lip 4 with its seat 23 is reduced drastically, thus helping to maintain the sealing efficiency and lengthening the working life of the seal 1 according to the invention.

According to another aspect of the invention, the surface 31 of the sealing ring 19 facing the seat 23 is shaped as a concave saddle 32 located between the end 22 of the lip 4 and an edge 33 which projects radially from the bead 21; during rotation of the seal 1 relative to the ring 5, the saddle 32 generates an annular, circumferential channel 35 between the end 22 of the lip 4, the edge 33 and the seat 23 which creates extremely turbulent air conditions as a result of the velocity, which establishes a form of dynamic sealing, so-called labyrinthine sealing, which replaces the forced sealing contact exerted by the lip 4 at low velocities or when stationary.

More particularly, it should be noted that the protection against the infiltration of impurities from the outside is effective both under stationary conditions by virtue of the forced contact of the lip 4 with its seat 23 and in movement by virtue of the dished form of the lip 4 which, due to centrifugal force, throws any dust particles out of the bearing or, more generally, the coupling.

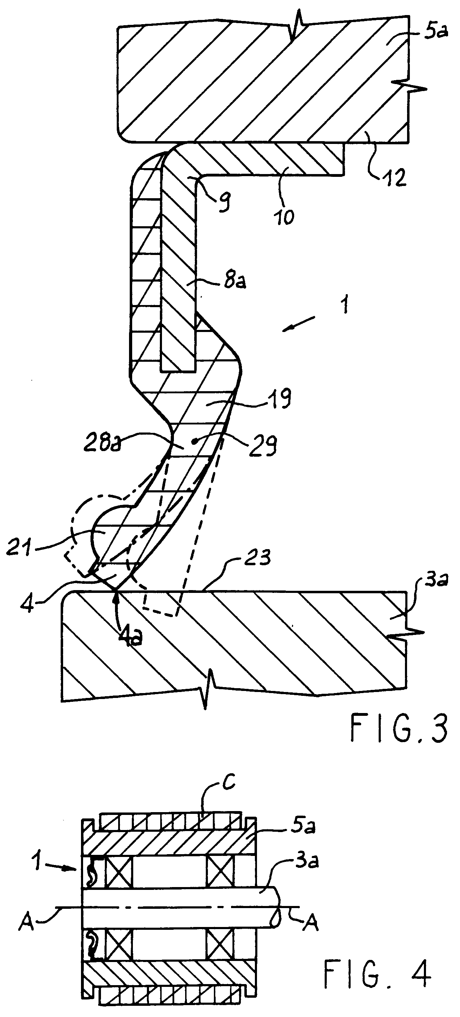

It is understood that the seal of the invention described above for mechanical members coupled for relative rotation, may have additions or replacements to equivalent parts without thereby departing from the scope of the invention; for example, the shape of the peripheral ring 19 and the relative position of the lip 4 and the bead 21 may be adapted to fit different positions of the seat 23 which may be flat and radial or formed on the inner ring of the bearing when the outer ring is the rotary one and the inner ring is stationary, as shown in Figures 3 and 4 in which parts in common with those of Figures 1 and 2 retain the same reference numbers.

Figure 3 shows a different version of the principle of the present invention applied to two bodies coupled for relative rotation and constituted, in particular (Figure 4) by a pulley 5a which is rotated on a shaft 3a of a belt-tensioner (pulley), in which a belt "C" passes over the pulley 5a.

In this second embodiment, the variable-attitude seal 1 is constituted by an annular metal reinforcement 9 to which a central part 8 of the seal 1 is anchored by co-moulding; the reinforcement 9 has a substantially right-angled "L" shaped section and is thus constituted by a radial part 8a connected integrally to a cylindrical part 10 bent at a right angle and coupled rigidly to a corresponding cylindrical surface 12 of the rotary pulley 5a.

The central part 8 projects radially inwardly, that is towards the axis of rotation "A" (Figure 4) and has a sealing ring 19 which is constituted by a sealing lip 4 which cooperates in sliding, interference contact, forming a fluid-tight seal, with a seat 23 of the stationary member 3a of the coupling and an annular body 21, or bead, carried by one end of the lip 4 on the opposite side from the latter's sealing edge 4a which cooperates with the seat 23; the lip 4 and the annular body 21 are both connected to the central part 8 by means of an annular root portion 28a of the lip 4, of limited thickness which can flex resiliently to allow the sealing lip 4 to effect limited oscillations in radial planes relative to the central part 8. Hence the annular band 28 behaves as a notional hinge having an axis extending in a circle around the axis of rotation "A" and represented in the plane of Figure 3 by the point 29.

Figure 3 shows the positions of the lip 4 and of the body 21 in their natural state, before assembly on the stationary shaft 3a in broken outline and, in chain line, the positions assumed by the lip 4 and the body 21 when the pulley 5a rotates at high speed with the result that the radial centrifugal force on the body 21 rotating therewith causes the lip 4 to move a small distance away from the sliding seat 23 thanks to the resilient flexure of the limited section 28.

As already noted with reference to the embodiment of Figure 2, the detachment of the lip 4 from its sealing seat 23 during rotation of the rotary member 5a does not reduce the protective effect of the seal 1 since a state of turbulence is set up in the air between the lip 4 and the seat 23 which generates a dynamic, labyrinthine seal.

Moreover the bead 21 may have a continuous development, as described above, or alternatively be discontinuous, being formed as a plurality of circumferential sectors each of which is joined so as to project from the lip 4 to form the ring 19 overall.

## Claims

1. A seal for mechanical members coupled for relative rotation, which is fixed to that one of the members (3; 5a) which rotates relative to the other of the coupled members (5; 3a) which is stationary, including a coupling part (8) for coupling with the rotary member and a sealing ring (19) which cooperates slidingly with a fixed seat (23) of the stationary member, the ring including at least one annular sealing lip (4) which is an interference fit with the seat (23) and is adapted, when the members are stationary relative to each other, to exert a given pressure on the seat (23),
characterised in that the sealing ring (19) includes means (21, 28) for varying the pressure automatically in dependence on the relative rate of rotation of the coupled members.

2. A seal according to Claim 1, characterised in that the pressure variation means comprise an annular body (21) formed integrally with the lip (4) and an annular connecting band (28) of limited thickness interposed between the sealing ring (19) and a central part (8) for connecting the lip (4) and the annular body (21) resiliently to the central part (8).

3. A seal according to Claim 2, characterised in that the annular body (21) is carried by one end of the lip (4) at the opposite side thereof from a sealing edge (4a) of the latter, adapted to cooperate with the seat.

4. A seal according to Claim 2, characterised in that the annular body (21) projects axially from the lip (4).

5. A seal according to Claim 4, characterised in that the sealing ring (19) is connected integrally with the annular connecting band (28) at a point intermediate the lip and the annular body.

6. A seal according to Claim 4 or Claim 5, characterised in that the annular body (21) has a mass such that, during rotation, it generates a first torque on the annular band (28) by centrifugal force to pivot the peripheral ring (19) in radial planes in the sense of moving the lip (4) away from the seat (23).

7. A seal according to Claim 6, characterised in that the first torque is opposed to and greater than a corresponding torque generated by the lip (4).

8. A seal according to any one of Claims 4 to 7, characterised in that the annular body (21) is joined to the lip (4) to form the sealing ring (19) by means of a concave saddle (32) which, together with the seat (23), forms a circumferential channel (35) for retaining turbulent air within it to form a seal between the lip (4) and the seat (23) during rotation of the rotary member (3).

9. A seal according to any one of the preceding Claims, characterised in that the sealing ring (19) is adapted to pivot resiliently through a small angle (a) in a radial plane relative to a central part (8) during the rotation of the members to annul the pressure and move the lip (4) away from the seat.

10. A seal according to any one of Claims 2 to 9, characterised in that the annular body (21) is constituted by a plurality of equispaced circumferential sectors, each sector forming part of the sealing ring (19).

11. A seal according to any one of the preceding Claims, characterised in that the central part (8) is constituted by a metal reinforcement (9) coated with a protective layer (14) of elastomeric material, and in that the sealing ring (19), formed from the same material, is joined continuously to the central part (8) and is anchored to a peripheral edge (17) of the reinforcement.

12. A seal according to Claim 11, characterised in that the reinforcement (9) is constituted by a radial portion (8a) formed integrally with a cylindrical portion (10) bent at a right angle and adapted to be mounted on the rotary member (3).
